# EUROPÄISCHE PATENTSCHRIFT

(11) **EP 1 878 103 B1**
(45) Veröffentlichungstag und Bekanntmachung des Hinweises auf die Patenterteilung: **12.09.2012**
(21) Anmeldenummer: 06708767.6
(22) Anmeldetag: 15.03.2006
(51) Int. Cl.: H02K 1/14, H02K 29/08

(54) **ELEKTRISCHE MASCHINE MIT KLAUENPOLSTATOR UND KLAUENPOLSTATORBLECH**
ELECTRIC MACHINE COMPRISING A CLAW-POLE STATOR AND CLAW-POLE STATOR METAL SHEET
MACHINE ELECTRIQUE DOTEE D'UN STATOR A POLES A GRIFFES ET D'UNE TOLE STATORIQUE A POLES A GRIFFES

(30) Priorität: 26.04.2005 DE 102005019310
(43) Veröffentlichungstag der Anmeldung: 16.01.2008
(73) Patentinhaber: ROBERT BOSCH GMBH, 70442 Stuttgart (DE)
(72) Erfinder: HEIER, Christoph, 76473 Iffezheim (DE); HEIN, Bernd, 72270 Baiersbronn/Schoenmuenzach (DE); THIERY, Jerome, 67100 Strasbourg (FR)
(86) Internationale Anmeldenummer: PCT/EP2006/060727
(87) Internationale Veröffentlichungsnummer: WO 2006/114350

(56) Entgegenhaltungen:
- EP-A- 0 766 370
- US-A- 6 114 785
- PATENT ABSTRACTS OF JAPAN Bd. 2000, Nr. 26, 1. Juli 2002 (2002-07-01) -& JP 2001 258211 A (JECO CO LTD), 21. September 2001 (2001-09-21)

## Beschreibung

### Stand der Technik

Die Erfindung geht aus von einer elektrischen Maschine nach dem Oberbegriff des Anspruchs 1 und einem Klauenpolstatorblech nach dem Oberbegriff des Anspruchs 6.

Bei elektrisch kommutierten Gleichstrommotoren, insbesondere Klauenpolmotoren mit permanenterregtem Rotor und außen liegendem Stator mit Kupferwicklung wird die Rotorlage mit Hallsensoren ermittelt. Der Hallsensor erhält sein Signal zur Steuerung der Kommutierung über das veränderliche Magnetfeld des Rotors. Bei hohen Strömen des Stators, z.B. Anlaufströmen bei hohen Betriebsspannungen, besteht die Gefahr, dass der Hallsensor auch Streufluss des Stators erfasst und damit Fehlsignale erzeugt, die die Funktion der elektrischen Maschine stören können.

Die JP 2001 258211 A beschreibt beispielsweise, auf welche Weise eine elektrische Maschine miniaturisiert und gleichzeitig eine Fehlfunktion einer Rotorlageerfassungseinheit verhindert werden kann. Zu diesem Zweck wird ein Abschirmelement zwischen einem Hallsensor und einem dem Hallsensor gegenüberliegenden Pol angeordnet. Dieses Abschirmelement dient dazu, einen magnetischen Fluss einer angeregten Spule zu unterbinden, so dass dessen Einfluss auf den Hallsensor verringert wird.

Die Erfindung ist eine elektrische Maschine gemäß Anspruch 1 und ein Klavenpolstatorblech gemäß Anspruch 6. Weitere Ausgestaltungen der Erfindung sind Gegenstand der abhängigen Ansprüche.

### Vorteile der Erfindung

Es werden eine elektrische Maschine mit einem Rotor und einem den Rotor umgebenden Klauenpolstator sowie ein Klauenpolstatorblech vorgeschlagen, wobei im Bereich eines Sensors zur Rotorlageerfassung eine Flussbarriere zum Abhalten von magnetischen Streufeldern des Klauenpolstators vorgesehen ist und der Klauenpolstator ein Klauenpolstatorblech umfasst, das nahzu als geschlossenes Ringsegment ausgebildet ist und an seinem Innenrand nach unten weisende Klauen aufweist. Vorteilhaft kann verhindert werden, dass der Sensor von Streufeldern des Klauenpolstators gestört wird. Der Sensor ist vorzugsweise ein Hallsensor. Die Flussbarriere ist als Luftspalt ausgebildet, der als schmaler Schlitz vorliegt. Die Flussbarriere ist dabei an einer der Klauen des Klauenpolstators in einem ringförmigen Bereich des Klauenpolblechs vorgesehen.

In einer günstigen Ausgestaltung ist die Flussbarriere im Bereich einer Klaue des Klauenpolstators vorgesehen. Der Bereich der Klaue wird weniger mit magnetischem Fluss beaufschlagt.

Die Flussbarriere ist im Bereich des Sensors angeordnet. Dadurch kann ein Streufeldeinfluss auf den Sensor weiter minimiert werden.

Die Flussbarriere ist als magnetischer Luftspalt ausgebildet. Die betreffende Klaue des Klauenpolstators kann nicht in Sättigung gehen, so dass eine Ausgabe von dadurch induzierten Fehlersignalen des Sensors vermieden wird. Der Luftspalt ist in Form eines schmalen Schlitzes ausgebildet. . Über die Art und Größe des Luftspalts kann die Wirksamkeit der Flussbarriere beeinflusst werden.

In einer günstigen Ausgestaltung kann der Luftspalt mit Kunststoff ausgespritzt sein. Dadurch wird eine Verletzungsgefahr vermindert.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von einem in Zeichnungen dargestellten Ausführungsbeispiel der Erfindung.

Im Folgenden zeigen:
- Fig. 1: eine Detailansicht einer bevorzugten elektrischen Maschine mit einem Klauenpolstator mit Flussbarriere; und
- Fig. 2: ein bevorzugtes Klauenpolstatorblech mit einer Flussbarriere.

### Beschreibung des Ausführungsbeispiels

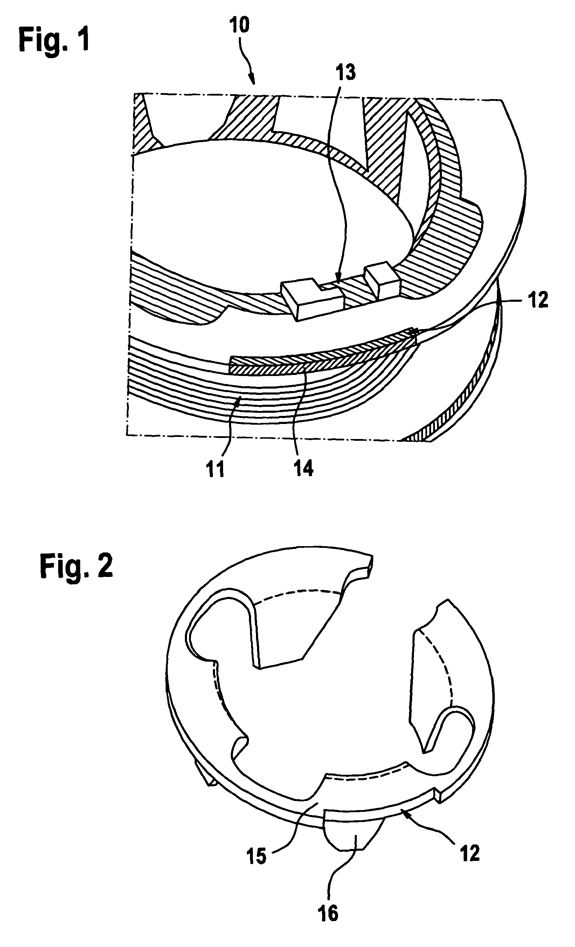

Fig. 1 zeigt einen Detailausschnitt einer elektrischen Maschine 10 mit einem Rotor und einem den Rotor umgebenden Klauenpolstator 11. Der Klauenpolstator 11 umfasst unter anderem ein Klauenpolstatorblech 15, wie es in Fig. 2 dargestellt ist.

Im Bereich eines als Hallsensor ausgebildeten Sensors 13 einer Rotorlageerfassungseinheit ist eine Flussbarriere 12 zum Abhalten von Streufeldern des Klauenpolstators 11 vorgesehen. Das Klauenpolblech 15 ist als nahezu geschlossenes Ringsegment ausgebildet und weist an seinem Innenrand nach unten weisende Klauen 16 auf.

Die Flussbarriere 12 ist im Bereich einer Klauen 16 des Klauenpolstators 11 vorgesehen, der im eingebauten Zustand dem Sensor 13 benachbart ist. An der betreffenden Klaue 16 ist im ringförmigen Bereich des Klauenpolblechs 15 eine als schmaler Schlitz ausgebildete Ausstanzung angeordnet, die im Klauenpolstator 11 die Flussbarriere 12 bildet.

Die Ausstanzung bildet einen Luftspalt, der im fertig montierten Klauenpolstator 11 formschlüssig mit Kunststoff ausgespritzt ist. Durch die Größe der Ausstanzung kann die Wirksamkeit der Flussbarriere 12 beeinflusst werden.

## Patentansprüche

1. Elektrische Maschine (10) mit einem Rotor und einem den Rotor umgebenden Klauenpolstator (11), bei der eine Rotorlageerfassungseinheit vorgesehen ist, wobei im Bereich eines Sensors (13) zur Rotorlageerfassung eine Flussbarriere (12) zum Abhalten von Streufeldern des Klauenpolstators (11) vorgesehen ist und der Klauenpolstator (11) ein Klauenpolstatorblech (15) umfasst, das nahzu als geschlossenes Ringsegment ausgebildet ist und an seinem Innenrand nach unten weisende Klauen (16) aufweist, **dadurch gekennzeichnet, dass** die Flussbarriere als Luftspalt an einer der Klauen (16) des Klauenpolstators (11) in einem ringförmigen Bereich des Klauenpolblechs (15) ausgebildet ist, wobei der Luftspalt als schmaler Schlitz vorliegt.

2. Elektrische Maschine nach Anspruch 1, **dadurch gekennzeichnet, dass** die Flussbarriere (12) im Bereich einer Klaue (15) des Klauenpolstators (11) vorgesehen ist.

3. Elektrische Maschine nach Anspruch 2, **dadurch gekennzeichnet, dass** der Sensor (13) im Bereich der Flussbarriere (12) angeordnet ist.

4. Elektrische Maschine nach einem der vorhergehenden Ansprüche, **dadurch gekennzeichnet, dass** die Flussbarriere (12) als Luftspalt, insbesondere als magnetischer Luftspalt, ausgebildet ist.

5. Elektrische Maschine nach einem der vorhergehenden Ansprüche, **dadurch gekennzeichnet, dass** der Luftspalt mit Kunststoff ausgespritzt ist.

6. Klauenpolstatorblech (15) für eine elektrische Maschine (10) nach einem der vorhergehenden Ansprüche, wobei in einem Bereich, in dem eine Montage eines Sensors (13) zur Rotorlageerfassung vorgesehen ist, eine Flussbarriere (12) zum Abhalten von Streufeldern angeordnet ist, **dadurch gekennzeichnet, dass** die Flussbarriere als Luftspalt an einer Klaue des Klauenpolstators (11) in einem ringförmigen Bereich des Klauenpolblechs (15) ausgebildet ist, wobei der Luftspalt als schmaler Schlitz vorliegt.

7. Klauenpolstatorblech nach Anspruch 6, **dadurch gekennzeichnet, dass** die Flussbarriere (12) in Form einer Ausnehmung ausgebildet ist, die einen Luftspalt bildet, insbesondere einen magnetischen Luftspalt.

8. Klauenpolstatorblech nach Anspruch 6 oder 7, **dadurch gekennzeichnet, dass** die Flussbarriere (12) im Bereich einer Klaue (15) ausgebildet ist.

## Claims

1. Electric machine (10) comprising a rotor and a claw-pole stator (11) surrounding the rotor, in which electric machine a rotor position detection unit is provided, wherein a flux barrier (12) for inhibiting leakage fields of the claw-pole stator (11) is provided in the region of a sensor (13) for rotor position detection, and the claw-pole stator (11) comprises a claw-pole stator lamination (15), which is designed virtually as a closed ring segment and has, at its inner edge, downwardly pointing claws (16), **characterized in that** the flux barrier is in the form of an air gap at one of the claws (16) of the claw-pole stator (11) in a ring-shaped region of the claw-pole lamination (15), the air gap being in the form of a narrow slot.

2. Electric machine according to Claim 1, **characterized in that** the flux barrier (12) is provided in the region of a claw (15) of the claw-pole stator (11).

3. Electric machine according to Claim 2, **characterized in that** the sensor (13) is arranged in the region of the flux barrier (12).

4. Electric machine according to one of the preceding claims, **characterized in that** the flux barrier (12) is in the form of an air gap, in particular in the form of a magnetic air gap.

5. Electric machine according to one of the preceding claims, **characterized in that** the air gap is filled by plastic being injected into it.

6. Claw-pole stator lamination (15) for an electric machine (10) according to one of the preceding claims, wherein a flux barrier (12) for inhibiting leakage fields is arranged in a region in which fitting of a sensor (13) for rotor position detection is provided, **characterized in that** the flux barrier is in the form of an air gap at a claw of the claw-pole stator (11) in a ring-shaped region of the claw-pole lamination (15), wherein the air gap is in the form of a narrow slot.

7. Claw-pole stator lamination according to Claim 6, **characterized in that** the flux barrier (12) is in the form of a cutout, which forms an air gap, in particular a magnetic air gap.

8. Claw-pole stator lamination according to Claim 6 or 7, **characterized in that** the flux barrier (12) is formed in the region of a claw (15).

## Revendications

1. Moteur électrique (10) doté d'un rotor et d'un stator à pôles à griffes (11) entourant le rotor, dans lequel une unité de détection de position de rotor est prévue, une barrière de flux (12) étant prévue dans la région d'un capteur (13) pour détecter la position de rotor afin de tenir à distance les champs de dispersion du stator à pôles à griffes (11) et le stator à pôles à griffes (11) comprenant une tôle de stator à pôles à griffes (15) prenant presque la forme d'un segment annulaire fermé et comportant des griffes (16) orientées vers le bas au niveau de son bord intérieur, **caractérisé en ce que** la barrière de flux prend la forme d'un interstice d'air réalisé au niveau d'une des griffes (16) du stator à pôles à griffes (11) dans une région annulaire de la tôle de pôle à griffes (15), l'interstice d'air prenant la forme d'une fente étroite.

2. Moteur électrique selon la revendication 1, **caractérisé en ce que** la barrière de flux (12) est prévue dans la région d'une griffe (15) du stator à pôles à griffes (11).

3. Moteur électrique selon la revendication 2, **caractérisé en ce que** le capteur (13) est disposé dans la région de la barrière de flux (12).

4. Moteur électrique selon l'une quelconque des revendications précédentes, **caractérisé en ce que** la barrière de flux (12) prend la forme d'un interstice d'air, notamment d'un interstice d'air magnétique.

5. Moteur électrique selon l'une quelconque des revendications précédentes, **caractérisé en ce que** de la matière plastique est injectée hors de l'interstice d'air.

6. Tôle de stator à pôles à griffes (15) pour un moteur électrique (10) selon l'une quelconque des revendications précédentes, une barrière de flux (12) étant prévue dans une région dans laquelle est disposé un montage d'un capteur (13) servant à détecter la position de rotor, en vue de tenir à distance les champs de dispersion, **caractérisée en ce que** la barrière de flux est réalisée sous la forme d'un interstice d'air prévu au niveau d'une griffe du stator à pôles à griffes (11), dans une région annulaire de la tôle de pôle à griffes (15), l'interstice d'air prenant la forme d'une fente étroite.

7. Tôle de stator à pôles à griffes selon la revendication 6, **caractérisée en ce que** la barrière de flux (12) prend la forme d'un évidement formant un interstice d'air, notamment un interstice d'air magnétique.

8. Tôle de stator à pôles à griffes selon la revendication 6 ou 7, **caractérisée en ce que** la barrière de flux (12) est réalisée dans la région d'une griffe (15).
